# EUROPÄISCHE PATENTSCHRIFT

(11) **EP 0 892 973 B1**
(45) Veröffentlichungstag und Bekanntmachung des Hinweises auf die Patenterteilung: **24.07.2002**
(21) Anmeldenummer: 98912239.5
(22) Anmeldetag: 10.02.1998
(51) Int. Cl.: G10D 3/00, G10D 3/06

(54) **VERFAHREN UND VORRICHTUNG ZUR OPTIMIERUNG DER SAITENLAGE VON ZUPF- UND STREICHINSTRUMENTEN**
METHOD AND DEVICE FOR OPTIMIZING THE POSITION OF THE STRINGS ON STRINGED AND PLUCKED INSTRUMENTS
PROCEDE ET DISPOSITIF POUR OPTIMISER LA POSITION DES CORDES SUR DES INSTRUMENTS A CORDES FROTTEES ET A CORDES PINCEES

(30) Priorität: 11.02.1997 DE 29703290 U
(43) Veröffentlichungstag der Anmeldung: 27.01.1999
(73) Patentinhaber: Plek Gitarrentechnologie GmbH, 12435 Berlin (DE)
(72) Erfinder: ANKE, Gerhard, D-10967 Berlin (DE)
(74) Vertreter: Wablat, Wolfgang, Dr.Dr.
(86) Internationale Anmeldenummer: DE9800443
(87) Internationale Veröffentlichungsnummer: WO9835338

(56) Entgegenhaltungen:
- DE-C- 228 461
- US-A- 4 037 510
- US-A- 4 777 858

## Beschreibung

Die Erfindung betrifft ein Verfahren zur Optimierung der Saitenlage von Zupf- und Streichinstrumenten gemäß dem Oberbegriff des Patentanspruchs 1 und eine Vorrichtung zur Durchführung dieses Verfahrens gemäß dem Oberbegriff des Patentanspruchs 16.

Ein wesentliches Qualitätskriterium bei Musikinstrumenten der oben genannten Art ist die Bespielbarkeit, die vorrangig durch die zum Niederdrücken der Saiten erforderliche Kraft charakterisiert ist. Diese Saitenniederdruckkraft ist in erster Linie vom Abstand zwischen der Unterkante der Saite und der Oberkante des Griffbrettes, bzw. bei bundierten Instrumenten, der Bundstäbe abhängig.

Die Bezeichnung "Griffbrettoberfläche" bezieht sich in den folgenden Ausführungen sowohl bei den mit Bünden versehenen Instrumenten (z. B. Gitarren) wie bei den bundlosen Instrumenten (z. B. Streichinstrumente, aber auch bundlose Elektro-Baßgitarren) auf das Oberflächenprofil des Griffbrettes, unabhängig davon, ob im Verlauf dieser Linie Bundstäbe eingearbeitet sind oder nicht. Bei den meisten dieser Griffbretter ergibt sich in der Draufsicht aufgrund der Verbreiterung zum Korpus hin eine trapezförmige Fläche, wie z.B. bei klassischen Gitarren. Darüber hinaus können sie aber auch eine gewölbte Oberfläche aufweisen, wie z.B. bei Streichinstrumenten, Elektro- und Westerngitarren, was als dreidimensionale Form dem Ausschnitt der Mantelfläche eines Kegelstumpfes entspricht.

Eine Vorrichtung zur Einstellung des Abstands zwischen Griffbrettoberfläche und Saiten ist beispielweise aus der DE-C-228 461 bekannt.

Obwohl die Beschreibung der Übersichtlichkeit wegen vorwiegend ausgerichtet ist auf das Messen und Bearbeiten bundierter Instrumente (Z.B.Gitarren), gelten die Sachverhalte gleichermaßen für bundlose Instrumente, nur daß dort, z.B. bei zu niedriger Höhe, die Saite nicht auf die Bünde, sondern das Holz des Griffbretts aufschlägt.

Zur Erzielung einer möglichst geringen Saitenniederdruckkraft kann der Saitenabstand zu den Bundstäben jedoch nicht beliebig klein eingestellt werden, da ansonsten die Schwingung der Saite beeinträchtigt wird, indem sie auf die nächstfolgenden Bünde aufschlägt. Um an jedem Punkt des Griffbrettes der schwingenden Saite den erforderlichen Raum zu geben, muß der Instrumentenhals bzw. die Linie der Bundoberflächen eine leicht gekrümmte Form aufweisen. Es gibt für jede Saite eines Instrumentes bei konstanter Anschlagsstärke nur ein optimales Griffbrettprofil. Jede Abweichung von dieser Linie hat zur Folge, daß entweder die Saite zu hoch über dem Griffbrett liegt und dadurch die Bespielbarkeit erschwert wird, oder, wenn die Saite zu niedrig liegt, sie beim Schwingen auf die nächstfolgenden Bünde (bzw. Griffbrettoberfläche) aufschlägt.

Eine Durchbiegung des Halses entsteht bei einigen Instrumenten aufgrund der Saitenzugspannung, wenn Konstruktion und Materialeigenschaften dies nicht verhindern. Jedoch ist diese Durchbiegung zum einen nicht gleichmäßig, weil der Instrumentenhals zum Korpus hin dicker wird, und das Griffbrett an seinem Ende auf der Decke des Instrumentes oder, z.B. bei Elektrogitarren, direkt auf dem Korpus aufgeleimt ist, zum anderen ist sie aufgrund der spezifischen Eigenschaften des Materials Holz kaum vorherzubestimmen. Die Folge sind zusammengesetzte Kurvenabschnitte mit unterschiedlichen Krümmungen. Eine optimale Einstellung der Krümmung durch die bei einigen Instrumenten vorhandene Halsstellschraube (wirkt im Inneren des Instrumentenhalses der Saitenzugspannung entgegen) ist aufgrund der geschilderten ungleichmäßigen Stärke des Halses ebenfalls nicht möglich.

Ein weiteres Problem ist die Tatsache, daß der Abstand der Bundoberkanten vom Holz der Griffbrettoberfläche nicht gleichmäßig ist, was einerseits bedingt ist durch den Einbau bei der Herstellung (manuelles Einhämmern oder maschinelles Einpressen), andererseits durch die Abnutzung der Bünde durch den Spieler. Sowohl in der maschinellen als auch der manuellen Fertigung treten Abweichungen im relevanten Bereich (>0,02 mm) auf. Dem wird traditionell durch manuelles Schleifen (sog. Abrichten) der Bundoberflächen Rechnung getragen. Da hierfür die Saiten entfernt werden müssen und keine genauen Werte für die von den Bundoberflächen abzutragende Materialmenge bekannt sind, ist dabei eine Berücksichtigung der Verformung durch die unter Saitenspannung auf den Hals ausgeübten Zugkräfte nicht möglich.

Einfluß auf die erforderliche Griffbrettkrümmung hat zudem die Art der Saitenschwingung, welche im wesentlichen abhängig ist von den Materialeigenschaften der Saite (Stahl/Nylon, Durchmesser, blank/umsponnen, Zugspannung, Mensurlänge, etc.) und der Kraft, mit der die Schwingung angeregt wird (Anschlagsstärke). Da die verschiedenen Saiten eines Instruments unterschiedlich stark sind und voneinander abweichende Zugspannungen aufweisen, muß auch die Griffbrettkrümmung längs der einzelnen Saiten unterschiedlich sein. Das erforderliche Griffbrettprofil ist bei dickeren Saiten und solchen mit geringerer Zugspannung, entsprechend der Hüllkurve ihrer Schwingung, stärker gekrümmt. Demzufolge wird die Kurve flacher, je dünner die Saite ist bzw. je stärker ihre Zugspannung ist. Zudem nimmt die erforderliche Krümmung des Griffbrettprofils mit der Anschlagsstärke zu (bzw. ab), entsprechend der größeren (bzw. kleineren) Schwingungsamplitude der Saite.

Bei der traditionellen Griffbrettbearbeitung wird dieses unterschiedliche Schwingungsverhalten der einzelnen Saiten nicht berücksichtigt, weil dafür weder verbindliche Werte bekannt sind noch mit manuellem Abrichten die erforderliche Genauigkeit (+/-0,02 mm) erreicht werden kann, um dem Griffbrett längs jeder Saite eine individuelle Krümmung zu geben. Somit ist das bekannte Abrichten des Griffbretts, bei dem die Bundstaboberkanten durch Schleifen von Hand in einer gewölbten Ebene auf eine Höhe gebracht werden, nur bedingt erfolgreich.

Der Erfindung liegt daher die Aufgabe zugrunde, ein vom handwerklichen Geschick unabhängiges, mit geringem Zeitaufwand anwendbares Verfahren zur individuellen, für eine gute Bespielbarkeit optimalen Einstellung der Saitenlage von Streich- und Zupfinstrumenten sowie eine entsprechende Vorrichtung zur Durchführung des Verfahrens anzugeben.

Erfindungsgemäß wird die Aufgabe mit einem Verfahren gemäß den Merkmalen des Patentanspruchs 1 und mit einer Vorrichtung gemäß Patentanspruch 16 gelöst.

Damit wird ein Verfahren zur optimalen Einstellung der Saitenlage serienmäßig oder in Handarbeit hergestellter, neuer oder gebrauchter Streich- oder Zupfinstrumente, insbesondere aber Gitarren, zur Verfügung gestellt, das bei dem komplexen Zusammenwirken unterschiedlicher Einzelmerkmale (wie z.B. Halskrümmung, ungleichmäßig abgenutztes Oberflächenprofil des Griffbretts, voneinander abweichende Bundhöhen oder abgenutzte Bundstäbe, durch Material, Saitenstärke und -typ bestimmte Saitenparameter oder Mensur) den geringstmöglichen Abstand zwischen der jeweiligen Saite und dem darunterliegenden Griffbrett bzw. den Bundstäben zuläßt, ohne daß die schwingende Saite an die Bundstäbe anschlagen kann und dadurch das unerwünschte "Schnarren" oder "Klirren" der Saite auftritt.

Aufgrund der durch den minimalen Abstand zwischen Saite und Griffbrett erreichten Saitenniederdruckkraft werden mit dem vorgeschlagenen Verfahren die spieltechnischen Eigenschaften des Instruments deutlich verbessert, ohne daß es für die Bearbeitung des Instruments besonderer handwerklicher Fähigkeiten oder Erfahrungen bedarf. Die maschinelle, computergesteuerte, spanabhebende Bearbeitung des Griffbrettprofils bzw. der Bundstäbe erlaubt Genauigkeiten im Bereich von +/-0,01 mm und die Erzielung glattester Oberflächen, wodurch der Spielkomfort weiter verbessert wird. Neben der Bearbeitung der Bundstäbe kann auch vom Griffbrett selbst Material abgetragen werden.

In Ausgestaltung der Erfindung kann die Berechnung der Griffbrettkrümmung im Verhältnis zur Saitenlage unter zusätzlicher Berücksichtigung der individuellen Anschlagstärke des Benutzers erfolgen, so daß die Qualität des Instruments weiter verbessert wird.

Um die Höhe der Saiten über dem Griffbrett einzustellen, muß jede Saite an ihren beiden Auflagepunkten (Sattel und Steg) in die errechnete Position gebracht werden. Dies erfolgt erfindungsgemäß durch Einformen, vorzugsweise Fräsen, V-förmiger Kerben mit gleicher Winkligkeit in Sattel und Steg des Instruments, in denen sowohl dicke als auch dünne Saiten gleichermaßen gut fixiert sind. Vorteilhafterweise kann hierbei für unterschiedliche Saitenstärken dasselbe Fräswerkzeug verwendet werden, weil bei bekannter Werkzeugform die resultierende Höhe der jeweiligen Saite in der Kerbe rechnergestützt ermittelt werden kann und durch die in entsprechender Höhe eingebrachte V-Form die Notwendigkeit entfällt, gerundete, unterschiedlich dicke Kerben zu formen. Ist aufgrund des Materials oder der konstruktiven Eigenschaften von Sattel und Steg eine maschinelle Bearbeitung nicht möglich (speziell bei Elektrogitarren ist in der Regel die Saitenlage am Steg mit Hilfe von Schrauben verstellbar), kann die Justierung per Hand vorgenommen werden, wobei die aktuelle Position der Saite durch Darstellung des Meßwertes am Rechner angezeigt wird.

Die erfindungsgemäße Vorrichtung zur Durchführung des Verfahrens umfaßt einen dreidimensional beweglichen Meßkopf und ein dreidimensional bewegliches Bearbeitungswerkzeug, in deren Bewegungsbahn eine mobile oder stationäre Haltevorrichtung für das zu behandelnde Instrument angebracht ist. Meß- und Bearbeitungswerkzeuge sind an einen Computer mit Datenspeicher angeschlossen, welcher alle relevanten Parameter und Meßwerte des Instrumentes einschließlich der Anschlagstärke aufnimmt und speichert, daraus die optimale Griffbrettkrümmung, Saitenlage, sowie die zur Bearbeitung erforderlichen Parameter errechnet und darstellt und die dreidimensionalen Bewegungen der Meß- und Bearbeitungswerkzeuge steuert.

In den Unteransprüchen sowie der nachfolgenden Beschreibung eines Ausführungsbeispiels sind weitere Merkmale, zweckmäßige Weiterbildungen und Vorteile der Erfindung angegeben.

Ein Ausführungsbeispiel der Erfindung wird anhand der Zeichnung näher erläutert. Es zeigen:
- Fig. 1: eine Vorrichtung zum Ausmessen und Abrichten des Griffbrettprofils einer der Vorrichtung zugeordneten Gitarre;
- Fig. 2: eine grafische Darstellung der durch Linien verbundenen Meßpunkte des Oberflächenprofils des Griffbretts einer Gitarre;
- Fig. 3a und 3b: eine grafische Darstellung des gemessenen Oberflächenprofils unterhalb einer dünnen Saite und der Saitenlage sowie des optimalen Verlaufs der Krümmung vor dem Abrichten (Fig. 3a) und nach dem Abrichten (Fig. 3b);
- Fig. 4a und 4b: eine grafische Darstellung des gemessenen Oberflächenprofils und der Saitenlage sowie der berechneten optimalen Krümmung bei einer dicken Saite vor dem Abrichten (Fig. 4a) und nach dem Abrichten (Fig. 4b);
- Fig. 5: einen Schnitt durch einen Sattel mit V-förmigen Kerben und in diese liegenden unterschiedlich dicken Saiten; und
- Fig. 6a und 6b: eine schematische Seitenansicht eines geraden und eines gekrümmten Gitarrenhalses mit einer schwingenden Saite.

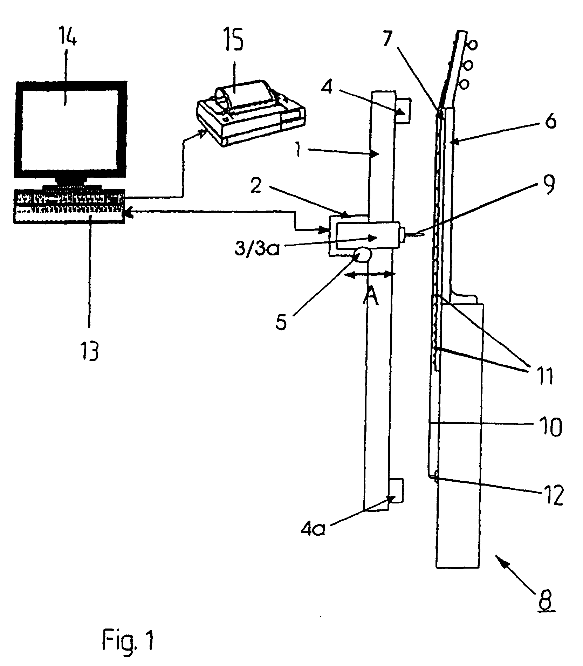

Die in Fig. 1 in einer Seitenansicht dargestellte Gitarre 8 wird mit Gummibändern auf einer mobilen Haltevorrichtung (nicht dargestellt) verspannt, die anschließend an einer Meß- und Abrichtvorrichtung arretiert wird. Die Haltevorrichtung ist mit verstellbaren Stütz- und Aufnahmeorganen ausgebildet, um Instrumente verschiedener Art und Größe festlegen zu können.

Die Meß- und Abrichtvorrichtung besteht aus einer hier vertikal angeordneten Führungsschiene 1, die auf zwei Querschienen 4 und 4a senkrecht zur Zeichnungsebene verschiebbar angeordnet ist und auf der ein angetriebener Schlitten 2 gleitend geführt ist. Der Antrieb der Führungsschiene 1 und des Schlittens 2 erfolgt über von einem Computer 13 gesteuerte Elektromotoren 5. An dem Schlitten sind wahlweise (oder gleichzeitig) ein Abrichtwerkzeug 3 und/oder ein Meßkopf 3a mit einem Halteorgan 9 angebracht. Das Abrichtwerkzeug 3 und der Meßkopf 3a sind mit dem Schlitten 2 senkrecht zur Bewegungsrichtung auf der Führungsschiene 1 entsprechend dem Pfeil A bewegbar. Die zu bearbeitende Gitarre 8 ist der Meß- und Abrichtvorrichtung so zugeordnet, daß das Griffbrett 7 des Halses 6 und damit die Saiten 10 und die Bundstäbe 11 dem Abrichtwerkzeug 3 bzw. dem Meßkopf 3a zugewandt sind. Der Meßkopf 3a sowie die Elektromotoren für den Antrieb des Schlittens 2 und der Führungsschiene 1 sind an den Computer 13 mit Datenspeicher und Monitor 14 sowie Drucker 15 angeschlossen.

Nach dem Ausmessen der Saitenstärke und der Abstände zwischen den Saiten und der Eingabe der entsprechenden Daten sowie weiterer Saitenparameter in den Computer 13 wird unter Saitenspannung - ausgehend von einer Referenzsaite - mit dem Meßkopf 3a nacheinander das Griffbrettprofil unter jeder Saite durch mechanisches oder berührungsloses Abtasten gemessen und das Meßergebnis in den Computer eingegeben und gespeichert, wobei während des Meßvorgangs die betreffende Saite mit dem Halteorgan 9 seitlich verschoben wird.

Außerdem wird die Saitenlage, d. h. der Abstand zwischen der Unterkante der Saiten 10 und der Oberkante der Bundstäbe 11 für jede Saite 10 am ersten und zwölften Bund gemessen. Das erzielte Meßergebnis wird auf dem Monitor 14 des Computers 13 dargestellt.

Anschließend errechnet der Computer 13 auf der Grundlage der zuvor eingegebenen Saitenparameter, nämlich Durchmesser, Material und Saitenart, sowie der Tonhöhe der Saite, der durch den Abstand zwischen Steg 12 und Sattel 16 bestimmten Mensur und ggf. der Anschlagstärke des betreffenden Musikers, die anhand von Testinstrumenten individuell ermittelt wird, das optimale Oberflächenprofil, d. h. den optimalen Kurvenverlauf der Oberkanten der Bundstäbe 11, die bei möglichst geringer Saitenhöhe - und damit geringer Saitenniederdruckkraft - ein Anschlagen der auf einen der Bundstäbe 11 heruntergedrückten und schwingenden Saite 10 an einen anderen Bundstab des Griffbretts sicher ausschließt.

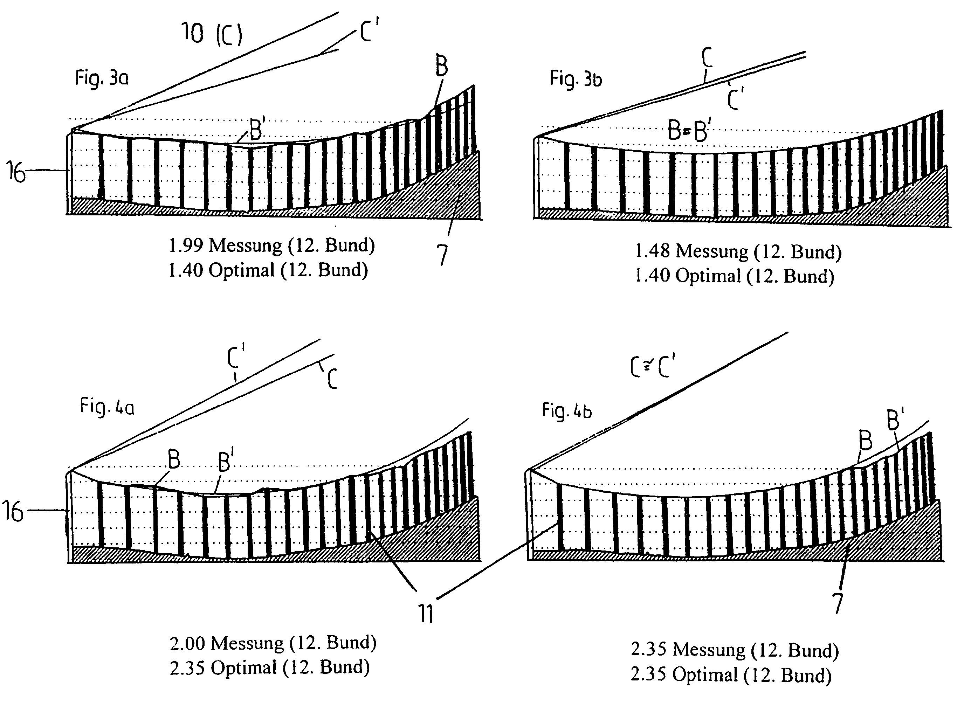

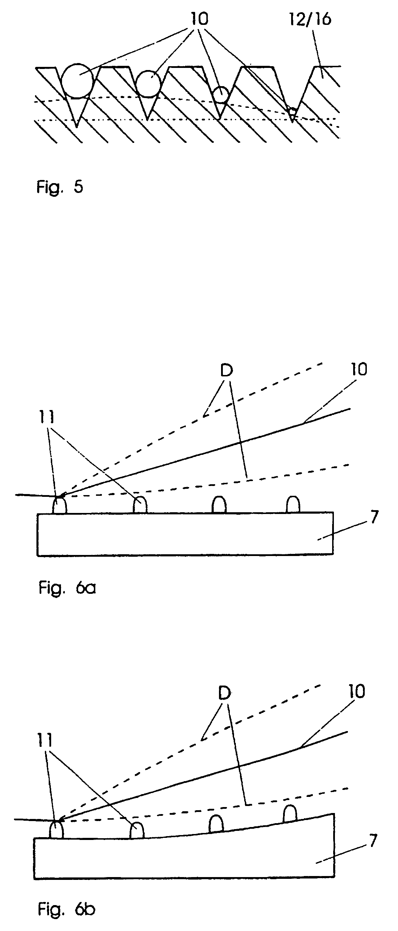

Die Fig. 3a und 4a geben das auf dem Monitor 14 oder mit dem Drucker 15 ausgedruckte, grafisch dargestellte Ergebnis der vorangegangenen Messung einschließlich des errechneten optimalen Verlaufs der Bundstaboberkanten und der optimalen Saitenlage für eine dünne - 0,23 mm starke - glatte Stahlsaite (Fig. 3a) und für eine dicke - 1,07 mm starke - umsponnene Stahlsaite wieder. In der Grafik sind als Meßergebnis die Profilierung in Längsrichtung des Griffbretts 7, der Sattel 16, die Höhe der Bundstäbe 11 und die Saite 10 (als strichlierte Linie C) dargestellt. Die stark ausgezogene Kurve B gibt den gemessenen Verlauf der Oberkanten der Bundstäbe 11 wieder, während die schwach ausgezogene Kurve B' den errechneten optimalen Verlauf der Bundstaboberkanten darstellt und die ausgezogene Gerade C' die errechnete optimale Lage der betreffenden Saite 10 über der optimalen Höhe der Bundstäbe 11 ist.

Aus dem Vergleich der in den Fig. 3a und 4a dargestellten Meß- und Berechnungsergebnisse wird deutlich, daß der Verlauf der Bundstabhöhen bei der dünnen Saite wesentlich flacher und der Saitenabstand zur Bundstaboberkante geringer ist als bei der dicken Saite. Andererseits kann die dünne Saite im Verhältnis zur Höhe der Bundstäbe 11 tiefer gelegt werden, während die dicke Saite einen größeren Abstand zu den Bundstäben 11 haben muß, um ein Anschlagen dieser Saite zu vermeiden. Die Zahlenangaben in den Zeichnungen geben den gemessenen und den optimalen Abstand in Millimetern zwischen der Oberkante des Bundstabes und der Unterkante der betreffenden Saite (im 12. Bund) wieder.

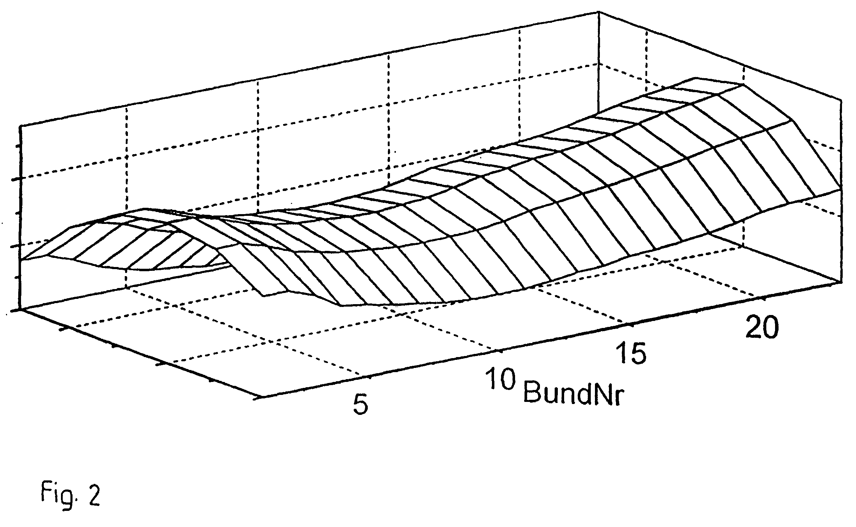

Entsprechend den Differenzwerten zwischen dem gemessenen und dem optimalen Verlauf der Bundstaboberkante unterhalb jeder Saite werden nun bei abgenommenen Saiten 10 die betreffenden Bundstäbe 11 über die Breite des Griffbrettes 7 von dem am Schlitten 2 befestigten Abrichtwerkzeug 3 überfahren, um dabei von der oberen Fläche der Bundstäbe 11 den über der optimalen Bundstabhöhe oder -kurve liegenden Differenzbetrag computergesteuert abzuschleifen. Das Griffbrett hat dann bezüglich der einzelnen Bearbeitungspunkte der Bundstäbe 11 das in Fig. 2 dargestellte Oberflächenprofil. Aus der Zeichnung ist erkennbar, daß die Griffbrettoberfläche nicht nur in Längsrichtung, sondern auch in Querrichtung gewölbt ausgebildet ist, d. h., die Wölbung in Längsrichtung ist bei dickeren Saiten stärker ausgebildet als bei dünnen Saiten.

Nach dem Abschleifen und dem damit verbundenen Abflachen der oberen Fläche der üblicherweise im Profil halbrund ausgebildeten Bundstäbe 11 werden die dabei gebildeten seitlichen Kanten durch Abschleifen gerundet, um damit die Spielqualität und den Klang weiter zu verbessern. Gleichzeitig wird dabei eine sehr glatte Bundstaboberfläche erzeugt, die sich ebenfalls vorteilhaft auf die Spielqualität auswirkt. Anschließend werden die Saiten 10 wieder aufgezogen und über den Sattel 16 und den Steg 12 die zuvor ermittelte optimale Saitenlage eingestellt. Bei der Einstellung des Abstandes zwischen den Bundstaboberkanten und der Saitenunterkante über den Sattel 16 und/oder den Steg 12 werden in diese entsprechend der gewünschten Saitenlage mehr oder weniger tiefliegende V-förmige Kerben maschinell eingeschnitten, wobei die Länge der Kerbe gering (ca. 2 mm) und der hinter der Kerbe liegende Bereich freigeschnitten ist. Wie Fig. 5 zeigt, können aufgrund gleichbleibender Winkel die Kerben mit ein und demselben Werkzeug für unterschiedlich starke Saiten und verschiedene Saitenlagen eingeschnitten werden. Zudem bietet die V-Form jeder Saite, ob dick oder dünn, einen sicheren Halt.

Nach dem Aufspannen der Saiten und der Einstellung der optimalen Saitenlage in der zuvor beschriebenen Art erfolgt eine erneute Messung der Bundstabhöhe und Saitenlage, und das erzielte Ergebnis wird wieder mit den entsprechenden optimalen (errechneten) Werten verglichen. Aus der grafischen Darstellung auf dem Monitor 14 bzw. dem Druckerausdruck, die in den Fig. 3b und 4b wiedergegeben ist, wird deutlich, daß nun der tatsächliche (gemessene) und der optimale (errechnete) Wert der Bundstabhöhen und der Saitenlagen im wesentlichen identisch sind und somit ein leicht bespielbares Instrument mit minimaler Saitenniederdruckkraft, Bundreinheit und sauberer Intonation zur Verfügung steht, das auf die individuelle Anschlagstärke des Benutzers eingestellt ist.

Die Fig. 6a und 6b veranschaulichen anhand eines geraden (Fig. 6a) und eines erfindungsgemäß gekrümmt (Fig. 6b) abgerichteten Profils eines Griffbretts 7 mit Bundstäben 11, wie die Griffbrettkrümmung der Hüllkurve D (Schwingungsbauch) der Saite 10 (Fig. 6b) angepaßt ist, um einen möglichst geringen Abstand zwischen der Saite und den Bundstäben zu erzielen, während bei der Darstellung in Fig. 6a ein mit einer großen Saitenniederdruckkraft verbundener Saitenabstand eingehalten werden muß, um das Anschlagen (Klirren) der Saite zu verhindern.

### Bezugszeichenliste

- 1: Führungsschiene
- 2: Schlitten
- 3: Abrichtwerkzeug
- 3a: Meßkopf
- 4: Querschiene
- 4a: Querschiene
- 5: Elektromotor
- 6: Hals
- 7: Griffbrett
- 8: Gitarre
- 9: Halteorgan
- 10: Saite
- 11: Bundstab
- 12: Steg
- 13: Computer
- 14: Monitor
- 15: Drucker
- 16: Sattel
- B: gemessener Bundstaboberkantenverlauf (Krümmung) vor dem Abrichten
- B': errechneter (optimaler) Bundstaboberkantenverlauf (Griffbrettkrümmung)
- C: gemessene Saitenlage
- C': errechnete (optimale) Saitenlage
- D: Hüllkurve der schwingenden Saite

## Patentansprüche

1. Verfahren zur Optimierung der Saitenlage von Zupf- und Streichinstrumenten, deren Griffbrett mit oder ohne Bundstäbe ausgebildet ist und über das Saiten gespannt sind, durch Abrichten der Griffbrettoberfläche, **dadurch gekennzeichnet, daß**
das Profil der Griffbrettoberfläche unterhalb jeder Saite unter Saitenspannung gemessen wird,
für die Minimierung des Abstandes zwischen Saite und Griffbrett unter Berücksichtigung des spezifischen Schwingungsverhaltens jeder individuellen Saite eine optimale Griffbrettkrümmung berechnet wird,
und die Differenz von errechnetem und gemessenem Profil von der Griffbrettoberfläche maschinell abgetragen wird,
wobei die Steuerung der Meß- und Bearbeitungsvorrichtung sowie die Berechnung der optimalen Werte in einem angeschlossenen Rechner erfolgt.

2. Verfahren nach Anspruch 1, **dadurch gekennzeichnet, daß** die Berechnung der optimalen Griffbrettkrümmung und Saitenlage unter Berücksichtigung der individuellen Anschlagstärke des Musikers, und zwar mit Hilfe von Testinstrumenten mit unterschiedlicher Saitenlage erfolgt.

3. Verfahren nach Anspruch 1 und 2, **dadurch gekennzeichnet, daß** das Abtragen des Differenzbetrages an der oberen Fläche der Bundstäbe (11) über die Griffbrettbreite punktuell im Bereich der jeweiligen Saite (10) erfolgt und die Seitenflächen der Bundstäbe anschließend gerundet werden.

4. Verfahren nach Anspruch 3, **dadurch gekennzeichnet, daß** das Abtragen der Differenzbeträge zwischen den einzelnen Meßpunkten in Form einer geglätteten Kurve erfolgt.

5. Verfahren nach einem der Ansprüche 1 bis 4, **dadurch gekennzeichnet, daß** die Bearbeitung der Bundstäbe bei abgenommenen Saiten erfolgt und anschließend an Sattel (16) und/oder Steg (12) der Gitarre (8) die im Verhältnis zum neuen Bundstaboberkantenverlauf bestimmte Saitenlage eingestellt wird.

6. Verfahren nach einem der Ansprüche 1 bis 5, **dadurch gekennzeichnet, daß** die Länge der schwingenden Saite gegebenenfalls durch Ändern der Auflageposition in Sattel und/oder Steg eingestellt wird.

7. Verfahren nach Anspruch 5 und 6, **dadurch gekennzeichnet, daß** die Einstellung der Auflageposition rechnergesteuert durch mechanisches Bearbeiten oder manuell vorgenommen wird sowie rechnergestützt kontrolliert wird.

8. Verfahren nach einem der Ansprüche 5 bis 7, **dadurch gekennzeichnet, daß** die Einstellung der Saitenlage der unterschiedlich starken Saiten (10) durch Einbringen von V-förmigen Kerben gleichen Winkels in entsprechend der jeweiligen Saitenlage unterschiedlicher Höhe im Sattel (16) und/oder im Steg (12) erfolgt und der Bereich hinter den V-förmigen Kerben freigeschnitten wird.

9. Verfahren nach einem der Ansprüche 3 bis 5, **dadurch gekennzeichnet, daß** bei geringer Bundstabhöhe zwischen den Bundstäben (11) Material vom Griffbrett abgetragen wird.

10. Verfahren nach Anspruch 1, **dadurch gekennzeichnet, daß** das Ausmessen der Griffbrettoberfläche unter der jeweiligen Saite mit mechanischen oder berührungsfreien Meßmethoden erfolgt und der Materialabtrag an Bundstäben, Sattel und Steg bzw. der Griffbrettoberfläche zwischen den Bundstäben mit spanabhebenden Verfahren durchgeführt wird.

11. Verfahren nach Anspruch 10, **dadurch gekennzeichnet, daß** das Ausmessen der Griffbrettoberfläche sukzessive oder simultan durchgeführt wird.

12. Verfahren nach Anspruch 10 und 11, **dadurch gekennzeichnet, daß** das Ausmessen mittels Laser, Ultraschall, Druckluft oder Näherungsschalter vorgenommen wird.

13. Verfahren nach Anspruch 1 und 2, **dadurch gekennzeichnet, daß** die das Schwingverhalten bestimmenden Parameter der jeweiligen Saiten einschließlich Mensur der Instrumente und gegebenenfalls individueller Anschlagstärke sowie die Meßwerte in bezug auf gegenseitigen Saitenabstand, Saitenlage und Griffbrettprofil in einem Computer (13) gespeichert werden, wobei die errechnete sowie die tatsächliche Griffbrettkontur und Saitenlage grafisch dargestellt werden und der errechnete optimale Bundstabhöhenverlauf dem gemessenen so zugeordnet wird, daß ein insgesamt geringer Materialabtrag erreicht wird.

14. Verfahren nach einem der Ansprüche 1 bis 13, **dadurch gekennzeichnet, daß** nach der Bearbeitung der Griffbrettoberfläche und der Einstellung der Saitenlage eine erneute Messung unter Saitenspannung vorgenommen und mit den errechneten optimalen Werten für die Saitenlage und den Krümmungsverlauf verglichen wird.

15. Verfahren nach Anspruch 1, **dadurch gekennzeichnet, daß** das der Saitenspannung entsprechende Halsprofil durch von den Saiten unabhängige Spannmittel simuliert wird.

16. Vorrichtung zur Durchführung des Verfahrens nach Anspruch 1, **gekennzeichnet durch** einen dreidimensional bewegbaren Meßkopf (3a) und ein dreidimensional bewegbares Abrichtwerkzeug (3), die jeweils an einen Computer (13) nebst Datenspeicher zur Speicherung der Parameter und Meßwerte des betreffenden Zupf- oder Streichinstruments sowie zur Berechnung der optimalen Griffbrettkrümmung und der Saitenlage und zur Steuerung des Abrichtwerkzeugs (3) bzw. des Meßkopfes (3a) angeschlossen sind, sowie eine im Bereich des Meßkopfes und/oder des Abrichtwerkzeugs anbringbare mobile oder stationäre Haltevorrichtung für das Instrument (8) wobei das Profil der Griffbrettoberfläche unterhalb jeder Saite unter Saltenspannung **durch** den Meßkopf (3a) gemessen wird und die Differenz von gemessenem und errechneten Profil der Griffbrettoberfläche **durch** das Abrichtwerkzeug (3) maschinell abgetragen wird.

17. Vorrichtung nach Anspruch 16, **dadurch gekennzeichnet, daß** der Meßkopf (3a) und/oder das Abrichtwerkzeug (3) an einem auf einer Führungsschiene (1), die auf Querschienen (4, 4a) in X-Richtung verschiebbar ist, in Y-Richtung und in Z-Richtung bewegbaren Schlitten angebracht sind, wobei der Antrieb jeweils über vom Computer (13) gesteuerte Antriebe (5) erfolgt.

18. Vorrichtung nach Anspruch 16 und 17, **dadurch gekennzeichnet, daß** an dem Meßkopf (3a) ein Halteorgan (9) vorgesehen ist, um bei der Messung unter Saitenspannung die Saite aus dem Meßbereich zu schieben.

19. Vorrichtung nach Anspruch 16 und 17, **dadurch gekennzeichnet, daß** an dem Meßkopf (3a) eine unter die Saite greifende gekrümmte Meßtasterspitze angeordnet ist.

## Claims

1. Method for optimizing the position of the strings on stringed and plucked instruments with a fretted or fretless fingerboard across which strings are stretched by tuning the fingerboard surface, **characterized in that** the profile of the fingerboard surface is measured underneath each tightened string, that an optimum curvature of the fingerboard surface is calculated to minimize the distance between string and fingerboard taking into account the specific vibration behaviour of each individual string, that the difference between the calculated and the measured profile is taken off from the fingerboard surface by a machine, the measuring and tuning apparatus and the calculation of optimum values being controlled by a computer connected to it.

2. Method according to claim 1, **characterized in that** the optimum fingerboard curvature and string position are calculated taking into account the individual temperament of the musician as determined using various test instruments with different positions of the strings.

3. Method according to claims 1 and 2, **characterized in that** the differential amount is taken off point-by-point at the upper surface of the fretwires (11) across the width of the fingerboard in the area of the respective string (10), and that the lateral surfaces of the fretwires are subsequently rounded.

4. Method according to claim 3, **characterized in that** the differential amounts are taken off between individual measuring points in the form of a smoothed curve.

5. Method according to any one of claims 1 through 4, **characterized in that** the fretwires are machined with the strings removed, and that the string position as determined in relation to the curve of the upper fretwire edge is subsequently adjusted at the nut (16) and/or bridge (12) of the guitar (8).

6. Method according to any one of claims 1 through 5, **characterized in that** the length of the vibrating string may optionally be adjusted by changing its resting position in the nut and/or bridge.

7. Method according to claims 5 and 6, **characterized in that** the resting position is set by computer-controlled machining or manually and verified using a computer.

8. Method according to any one of claims 5 through 7, **characterized in that** the position of strings (10) with differing gauges is set by cutting V-shaped notches having the same angle at various levels into the nut (16) and/or bridge (12) in accordance with the respective string position and by cutting out the area behind said V-shaped notches.

9. Method according to any one of claims 3 through 5, **characterized in that** material is taken off from the fingerboard between fretwires (11) it the fretwire height is low.

10. Method according to claim 1, **characterized in that** the fingerboard surface underneath the respective string is measured using mechanical or non-contact methods, and that the material is taken off from the fretwires, the nut and bridge, or the fingerboard surface between the fretwires using cutting processes.

11. Method according to claim 10, **characterized in that** the fingerboard surface is measured successively or simultaneously.

12. Method according to claims 10 and 11, **characterized in that** measurement is carried out using laser, ultrasound, compressed air or limiting switches.

13. Method according to claims 1 and 2, **characterized in that** the parameters determining the vibration behaviour of the individual strings including the diapason of the instrument and, optionally, the individual temperament and measured values such as string spacing, string position and fingerboard profile are stored in a computer (13), and that the calculated and real fingerboard contour and string position are displayed in a diagram in which the measured and calculated curve of the fretwire heights are matched to minimize material removal.

14. Method according to any one of claims 1 through 13, **characterized in that** another measurement is carried out after machining the fingerboard surface, setting the string position and tightening the strings which is compared with the calculated optimum values for string position and curvature.

15. Method according to claim 1, **characterized in that** the neck profile with the strings tightened is simulated by fastening fixtures that are independent of the strings.

16. Device for carrying out the method according to claim 1, **characterized by** a measuring head (3a) and a tuning tool (3), both movable in three dimensions and each connected to a computer (13) with a data store for storing the parameters and measured values of the respective plucked or stringed instrument and for calculating the optimum fingerboard curvature and string position as well as for controlling the tuning tool (3) or measuring head (3a), and a mobile or stationary fixing apparatus for the instrument (8) that can be mounted in the area of the tuning tool or measuring head, wherein the profile of the fingerboard surface is measured underneath each tightened string by the measuring head (3a) and the difference between the calculated and the measured profile of the fingerboard surface is taken off by the tuning tool (3).

17. Device according to claim 16, **characterized in that** the measuring head (3a) and/or tuning tool (3) are mounted on a carriage movable in Y- and Z-direction on a guide rail (1), which is movable along transverse rails (4, 4a) in X-direction, both movements being driven by drives (5) controlled by the computer (13).

18. Device according to claims 16 and 17, **characterized in that** the measuring head (3a) is equipped with a holding member (9) to push the string out of the measuring range when measuring with strings tightened.

19. Device according to claims 16 and 17, **characterized in that** the measuring head (3a) is equipped with a curved tracer tip that grips under the string.

## Revendications

1. Procédé pour optimiser la position des cordes d'instruments à cordes pincées et à cordes frottées, dont la touche est réalisée avec ou sans frettes et par-dessus laquelle sont tendues des cordes, par dressage de la surface de la touche, **caractérisé en ce que** l'on mesure le profil de la surface de touche au-dessous de chaque corde sous tensionnement de la corde, on calcule une courbure optimale de la touche pour minimiser la distance entre la corde et la touche en prenant en compte le comportement oscillatoire spécifique de chaque corde individuelle, et on enlève à la machine la différence entre le profil calculé et le profil mesuré depuis la surface de la touche, la commande du dispositif de mesure et d'usinage ainsi que le calcul des valeurs optimales s'effectuant dans un calculateur branché.

2. Procédé selon la revendication 1, **caractérisé en ce que** l'on procède au calcul de la courbure optimale de la touche et de la position optimale des cordes en prenant en compte l'intensité de frappe individuelle du musicien, et ceci à l'aide d'instruments d'essai présentant des positions de corde différentes.

3. Procédé selon les revendications 1 et 2, **caractérisé en ce que** l'enlèvement du montant différentiel sur la surface supérieure des frettes (11) sur la largeur de la touche s'effectue de façon ponctuelle dans la zone de chaque corde (10), et les surfaces latérales des frettes sont ensuite arrondies.

4. Procédé selon la revendication 3, **caractérisé en ce que** l'enlèvement des montants différentiels entre les points de mesure individuels s'effectue sous forme d'une courbe lissée.

5. Procédé selon l'une des revendications 1 à 4, **caractérisé en ce que** l'on effectue l'usinage des frettes dans l'état dépourvu de cordes et ensuite on règle la position des cordes déterminée par rapport au nouveau tracé de l'arête supérieure des frettes sur le sillet (16) et/ou sur le chevalet (12) de la guitare (8).

6. Procédé selon l'une des revendications 1 à 5, **caractérisé en ce que** l'on règle la longueur de la corde en oscillation le cas échéant par modification de la position d'appui dans le sillet et/ou dans le chevalet.

7. Procédé selon les revendications 5 et 6, **caractérisé en ce que** l'on effectue le réglage de la position d'appui sous la commande d'un calculateur par usinage mécanique ou manuel et on le contrôle sous l'assistance par calculateur.

8. Procédé selon l'une des revendications 5 à 7, **caractérisé en ce que** l'on effectue le réglage de la position des cordes (10) d'épaisseurs différentes par taille d'entailles en forme de V d'angle égal à des hauteurs différentes en correspondance de la position respective des cordes dans le sillet (16) et/ou dans le chevalet (12), et **en ce que** l'on dégage la zone en arrière des entailles en forme de V.

9. Procédé selon l'une des revendications 3 à 5, **caractérisé en ce que** dans le cas d'une petite hauteur des frettes, on enlève du matériau de la touche entre les frettes (11).

10. Procédé selon la revendication 1, **caractérisé en ce que** l'on effectue la mesure de la surface de touche au-dessous de la corde respective par des méthodes de mesure mécaniques ou sans contact, et on effectue l'enlèvement de matière sur les frettes, sur le sillet et sur le chevalet ou sur la surface de la touche entre les frettes par un procédé d'enlèvement de matière.

11. Procédé selon la revendication 10, **caractérisé en ce que** l'on effectue la mesure de la surface de touche de façon successive ou simultanée.

12. Procédé selon les revendications 10 et 11, **caractérisé en ce que** l'on effectue la mesure au moyen d'un laser, par ultrasons, à l'aide d'air comprimé ou de commutateur(s) de proximité.

13. Procédé selon les revendications 1 et 2, **caractérisé en ce que** l'on mémorise dans un ordinateur (13) les paramètres déterminant le comportement oscillatoire de la corde respective, y compris la mesure des instruments et le cas échéant l'intensité de frappe individuelle ainsi que les valeurs mesurées par rapport à la distance mutuelle des cordes, la position des cordes et le profil de la touche, et on représente par voie graphique le contour de touche calculé ainsi que le contour réel et la position des cordes, et on associe le tracé en hauteur calculé optimal des frettes à celui mesuré, de telle sorte que l'on obtient dans l'ensemble un faible enlèvement de matière.

14. Procédé selon l'une des revendications 1 à 13, **caractérisé en ce qu'**après usinage de la surface de touche et après réglage de la position des cordes, on effectue une nouvelle mesure sous tensionnement des cordes, et on la compare avec les valeurs optimales calculées pour la position des cordes et pour le tracé de courbure.

15. Procédé selon la revendication 1, **caractérisé en ce que** le profil du manche correspondant à la tension des cordes est simulé par des moyens de tensionnement indépendants des cordes.

16. Dispositif pour mettre en oeuvre le procédé selon la revendication 1, **caractérisé par** une tête de mesure (3a) mobile dans trois dimensions et par un outil de dressage (3) mobile dans trois dimensions, qui sont branchés chacun à un ordinateur (13) comportant une mémoire de données pour mémoriser les paramètres et les valeurs mesurées de l'instrument correspondant à cordes pincées ou à cordes frottées ainsi que pour calculer la courbure optimale de la touche et la position optimale des cordes et pour commander l'outil de dressage (3) ou la tête de mesure (3a), ainsi que par un dispositif de maintien pour l'instrument (8), mobile ou stationnaire et susceptible d'être agencé dans la zone de la tête de mesure et/ou de l'outil de dressage, dans lequel le profil de la surface de la touche est mesuré au-dessous de chaque corde sous tensionnement des cordes par la tête de mesure (3a), et on enlève à la machine la différence entre le profil mesuré et le profil calculé depuis la surface de la touche par l'outil de dressage (3).

17. Dispositif selon la revendication 16, **caractérisé en ce que** la tête de mesure (3a) et/ou l'outil de dressage (3) sont agencés sur un chariot mobile en direction Y et en direction Z sur un rail de guidage (1) qui est mobile en translation en direction X sur des rails transversaux (4, 4a), l'entraînement s'effectuant via des entraînements (5) commandés par l'ordinateur (13).

18. Dispositif selon les revendications 16 et 17, **caractérisé en ce que** sur la tête de mesure (3a) est prévu un organe de maintien (9), afin de pousser la corde hors de la zone de mesure pendant la mesure sous tensionnement de cordes.

19. Dispositif selon les revendications 16 et 17, **caractérisé en ce qu'**une pointe recourbée d'un palpeur de mesure, laquelle s'engage au-dessous de la corde, est agencée sur la tête de mesure (3a).
